(19) Europäisches Patentamt
European Patent Office
Office européen des brevets

(11) **EP 4 198 495 A1**

(12) **EUROPEAN PATENT APPLICATION**

(43) Date of publication:
**21.06.2023 Bulletin 2023/25**

(21) Application number: **21214460.4**

(22) Date of filing: **14.12.2021**

(51) International Patent Classification (IPC):
**G01N 21/25** (2006.01)   **C03C 17/00** (2006.01)
**A01M 29/08** (2011.01)   **G01J 3/50** (2006.01)
**G01N 21/84** (2006.01)   **G02B 5/26** (2006.01)
**G01N 21/55** (2014.01)

(52) Cooperative Patent Classification (CPC):
**G01N 21/251; A01M 29/08; C03C 17/3417;**
**G01J 3/462; G01J 3/465; G01J 3/50; G01N 21/55;**
**G01N 21/8422; G02B 5/26;** C03C 2217/734;
G01J 3/0264; G01N 2021/8433; G01N 2021/8438

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Université de Namur
5000 Namur (BE)**

(72) Inventors:
• **MOUCHET, Sébastien
  Namur (BE)**
• **DEPARIS, Olivier
  Vaulx (BE)**

(74) Representative: **Gevers Patents
Intellectual Property House
Holidaystraat 5
1831 Diegem (BE)**

(54) **METHOD FOR DETERMINING A GLAZING FOR REDUCING BIRD COLLISION AND A GLAZING FOR REDUCING BIRD COLLISION**

(57)     The present invention relates to a method for determining a glazing for reducing bird collisions, the glazing comprising at least one substrate and over at least a part of the substrate surface, a multilayer UV reflectance coating, the method comprising the steps of (i) Defining layer materials, layer refractive indices and layer thicknesses forming the coating, (ii) Determining the reflectance spectrum of the coated substrate, at a fixed light incidence angle with respect to the normal to the substrate, (iii) Associating to the reflectance spectrum a colour perceived according to a human vision model and a colour perceived according to an avian vision model, (iv) Repeating the steps (i) to (iii) for different layer materials, layer refractive indices and layer thicknesses of the coating, (v) Selecting the coating such that the colour of the reflectance spectrum perceived according to the human vision model is the closest to the colour of the reflectance spectrum perceived according to the human vision model of the substrate without coating and for which the colour of the reflectance spectrum perceived according to the avian vision model is the furthest to the colour of the reflectance spectrum perceived according to the avian vision model of the substrate without coating. The invention also relates to a glazing for reducing bird collisions.

**Description**

**Technical field**

The invention relates to a method for determining a glazing for reducing bird collision and to a glazing for reducing bird collisions.

**Prior art**

Bird deaths due to glazing strikes represent one of the greatest threats to avian mortality next to habitat destruction. Due to the reflective and transparent characteristics of glass, the glass surface is not detected by birds. Due to those reflections, birds perceive false images of, for example, the sky, other buildings, vegetation and even open space. As a result, birds collide with the glazing, trying to get through.

WO2016/1989011 discloses a glazing for minimizing or preventing bird collisions with windows or other glazing. The glazing comprises a substrate with a UV reflectance coating deposited over the substrate in a patterned arrangement. The patterned arrangement is comprised of a plurality of stripes, wherein each of the plurality of stripes has a thickness that changes by 10 nm or less over every 1 mm in width. The glazing further comprises an antireflection coating between the UV reflectance coating and the substrate.

WO2015/183681 discloses an insulating glass window unit comprising a first glass substrate, a second glass substrate spaced apart from the first glass substrate, a UV reflecting coating provided on the first glass substrate and on an exterior surface of the insulating glass window unit so as to face an exterior of a building in which the insulating glass window unit is to be mounted and a low-E coating provided on the other side of the first glass substrate, so that the first glass substrate supports and is located between the UV reflecting coating and the low-E coating. The UV reflecting coating comprises first, second, third, and fourth layers in this order moving away from the first glass substrate, and wherein the first and third layers are high index layers having a refractive index of at least about 2.25 and the second and fourth layers are low index layers having a refractive index of no greater than 1.8, where refractive indices are measured at 550 nm;

However, these solutions are too complex and expensive. The coating is not strongly enough reflecting for birds while is too visible to the human eye from a wide range of angles of view (what is detrimental to the aesthetics of the glazing). These solutions even require the use of anti-reflection layer.

There is a need for a coating for a glazing which is invisible to the human eye but reflects strongly in violet and ultraviolet range in order to target avian vision and reduce bird collision.

**Disclosure of the invention**

An object of the invention is to provide a method for determining a glazing for reducing bird collisions, the glazing comprising at least one substrate and over at least a part of the substrate surface, a multilayer UV reflectance coating, the method comprising the steps of

(i) Defining layer materials, layer refractive indices and layer thicknesses forming the coating,
(ii) Determining the reflectance spectrum of the coated substrate, at a fixed light incidence angle with respect to the normal to the substrate,
(iii) Associating to the reflectance spectrum a colour perceived according to a human vision model and a colour perceived according to an avian vision model,
(iv) Repeating the steps (i) to (iii) for different layer materials, layer refractive indices and layer thicknesses of the coating,
(v) Selecting the coating such that

- the colour of the reflectance spectrum perceived according to the human vision model is the closest to the colour of the reflectance spectrum perceived according to the human vision model of the substrate without coating and for which
- the colour of the reflectance spectrum perceived according to the avian vision model is the furthest to the colour of the reflectance spectrum perceived according to the avian vision model of the substrate without coating.

According to an embodiment, the coating is a periodic stack of different layers with their respective material, refractive index and thickness, the number of periods of different layers being equal to or greater than two.

According to an embodiment, the coating is a periodic stack of two different layers, with their respective material, refractive index and thickness.

According to an embodiment, the thickness of the two layers of the periodic stack are in the ranges of 100 nm $\leq d_1 \leq$ 130 nm and 5 nm $\leq d_2 \leq$ 10 nm and with a reflective index in the range of 2 < $n_1$ < 2.8 and 1.4 < $n_2$ < 1.5 respectively (measured at a wavelength of 300 nm).

According to an embodiment, at step (ii), reflectance spectrum of the coated substrate is also determined with a light incidence angle from 0 to 90° with respect to the substrate, and/or at step (iii), a lightness is also associated to the reflectance spectrum perceived according to the human vision model.

According to an embodiment, the human vision model is expressed in the CIE 1976 L*a*b* colour space.

According to an embodiment, at step (v), the Euclidean distance between L*a*b* coordinates of the coated substrate and L*a*b* coordinates of the uncoated substrate is calculated and selection of the coating is performed by minimising said Euclidean distance.

According to an embodiment, at step (iv) the repetition of steps (i), (ii) and (iii) is performed with layer thicknesses selected between 1 and 300 nm with a step of 1 nm.

According to an embodiment, the avian vision model is chosen to have a violet cone exhibiting a sensitivity peak at the lower boundary of the range visible to human being, preferably, the avian vision model is chosen to have a violet cone exhibiting a sensitivity peak between 415 and 426 nm.

According to an embodiment, the layers of the multilayer UV reflectance coating are dielectric materials chosen amongst $TiO_2$, $SiO_2$, $Al_2O_3$, ZnO, $HfO_2$, $ZrO_2$, $Cr_2O_3$ or $Y_2O_3$.

An object of the invention is also to provide a glazing for reducing bird collisions obtained with the method as described above, the glazing comprising

- at least one substrate and
- over at least a part of the substrate surface, a multilayer UV reflectance coating with a periodic stack of two different layers with their respective thickness and refractive indices, the number of periods of two different layers being equal to or greater than two.

According to an embodiment, the UV reflectance coating reflects daylight in the wavelength range of approximately 320 nm to 420 nm.

According to an embodiment, the UV reflectance coating covers at least parts of the substrate, with stripes forming a random or a grid pattern.

According to an embodiment, the width of these stripes are between 0.3 cm and 2 cm and the stripes are spaced by a space between 1 cm to 10 cm.

According to an embodiment, the coating is deposited on a bare substrate.

In the framework of this document, the use of the indefinite article "a", "an" or the definite article "the" to introduce an element does not exclude the presence of a plurality of these elements. In this document, the terms "first", "second", "third" and the like are solely used to differentiate elements and do not imply any order in these elements.

In the framework of the present document, the use of the verbs "comprise", "include", "involve" or any other similar variant, as well as their conjugational forms, cannot exclude the presence of elements other than those mentioned. When the verb "comprise" is used for defining an interval by the terms "comprised between" two values, these two values should not be interpreted as excluded from the interval.

All the embodiments of the method according to the invention and the advantages of the method apply mutatis mutandis to the glazing according to the invention.

**Brief description of the figures**

Other characteristics and advantages of the present invention will appear on reading the following detailed description, for the understanding of which, it is referred to the attached figures where:

- Figure 1 illustrates a schematic of the glazing with coating for reducing bird collisions;
- Figure 2 illustrates the Euclidean distance in L*a*b* color space $\Delta E_{a*b*}$ as a function of the chromatic distance $\Delta S$ for the vision system of the species of interest; this graph serves to determine optimal solutions in a two-objective optimization problem;
- Figure 3 illustrates reflectance spectra corresponding to four optimal solutions taken from figure 2;
- Figure 4 illustrates quantum catches for three bird species and on the optimal solution from figure 3;
- Figure 5 illustrates the reflectance spectra corresponding to a glazing with a different coating;
- Figures 6 and 7 are pictures of a glazing with the coating structure of figure 5 taken under visible light and UV light.

The drawings in the figures are not scaled. Similar elements can be assigned by similar references in the figures. In the framework of the present document, identical or analogous elements may have the same references. The presence of reference numbers in the drawings cannot be considered to be limiting, in particular if these numbers are indicated in the claims.

**Description of specific embodiments of the invention**

The invention relates to a method for determining a glazing for reducing bird collisions, the glazing comprising at least one substrate and over at least a part of the substrate surface, a multilayer UV reflectance coating. The method comprising the steps of (i) defining layer materials, layer refractive indices and layer thicknesses forming the coating, (ii) determining the reflectance spectrum of the coated substrate, at a fixed light incidence angle with respect to the normal to the substrate, (iii) associating to the reflectance spectrum a colour perceived according to a human vision model and a colour perceived according to an avian vision model, (iv) repeating the steps (i) to (iii) for different layer materials, layer refractive indices and layer thicknesses of the coating, (v) selecting the coating such that the colour of the reflectance spectrum perceived according to the human vision model is the closest to the colour of the reflectance spectrum perceived according to the human vision model of the substrate without coating and for which the colour of the reflectance spectrum perceived according to the avian vision model is the furthest to the colour of the reflectance spectrum perceived according to the avian vision model of the substrate without coating. The method makes it possible to optimise the structure of the glazing coating in terms of material composition, refractive indices and thickness of the coating. The glazing coating minimizes bird collisions by strongly reflecting UV in order to target avian vision while remaining invisible to the human eye. Such a coating deposited on a substrate makes the glazing bird-safe while preserving the aesthetics of the glazing. The deposited structure forming the coating is only perceived by birds.

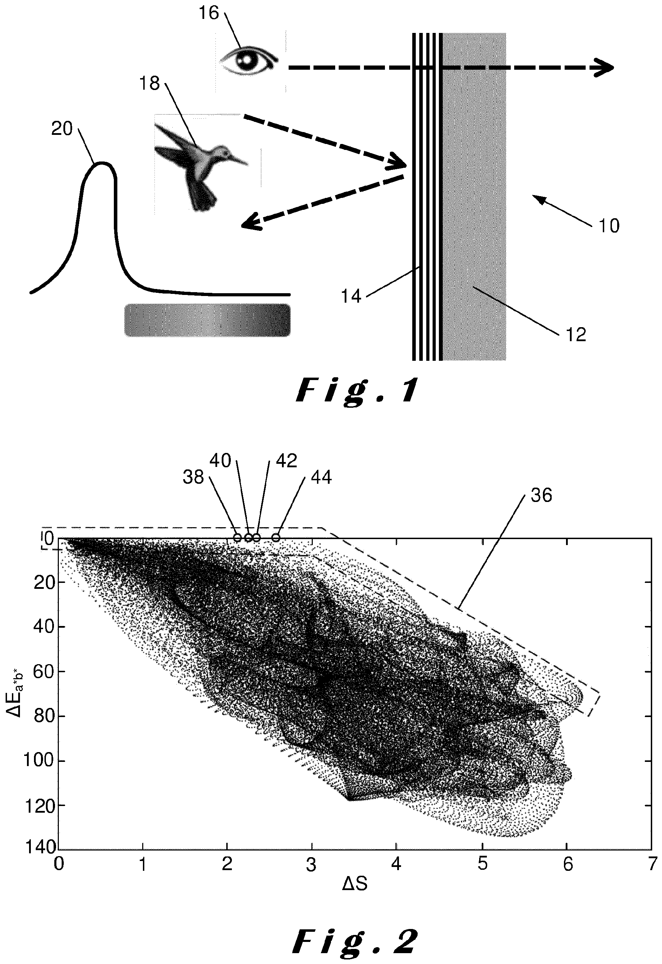

Figure 1 illustrates a glazing 10 coated for reducing bird collisions. The glazing 10 comprises at least one substrate 12. The glazing 10 may also comprise double- or triple-glazing with two or more substrates 12. The substrate 12 is for example a glass slide (which can be made of soda-lime glass (SLG)) or a Plexiglas slide. The glazing 10 is preferably on the exterior surface of a building, where collisions with birds are detrimental to the birds and the glazing. On one surface of the substrate 12, preferably the exterior surface, the glazing 10 comprises a multilayer UV reflectance coating 14. The number of layers is not limited to the number of layers depicted in figure 1; the coating 14 comprises at least two layers. The coating 14 is invisible to human perception 16 but strongly reflects in the UV range, where birds 18 are able to see. More specifically, the UV reflectance coating 14 reflects daylight in the wavelength range of approximately 320 nm to 420 nm. This wavelength range 20 makes it possible to be at the boundary of invisible/visible human wavelengths (illustrated by the optical spectrum below reference 20) while being visible by number of bird species.

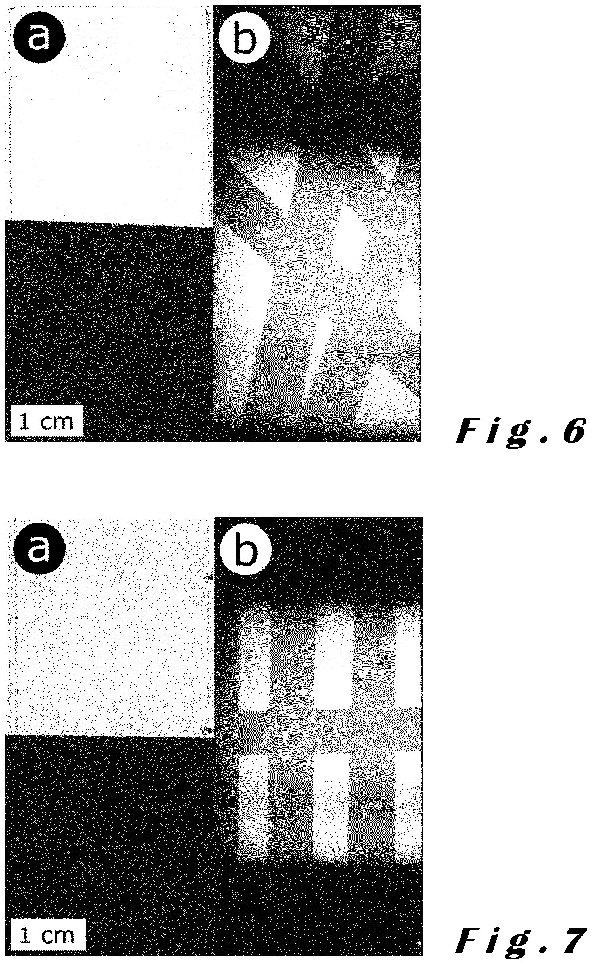

The coating 14 is a covering that is applied to the surface of the substrate 12. The substrate 12 is preferably flat. The coating deposition can be made by PVD technique but also other techniques such as sol-gel process or RF (for "Radio Frequency") plasma polymerisation. The coating 14 may completely cover the substrate 12 or only parts of the substrate 12, and forming for instance a specific pattern. The pattern allows birds to perceive a contrast between different regions (coated vs non-coated), which further enhance the visual repelling effect. These regions have a size smaller than the size of a bird so that birds would regard the coated substrate (i.e., the glazing 10) as an obstacle through which they cannot pass. The pattern can be of stripes forming a random pattern (or a Mikado-pattern) or a grid pattern, namely two sets of parallel stripes of one region type; the stripes may cross at right angles. The width of the stripes is between 0,3 and 2 cm. The stripes are spaced by a space between 1 to 10 cm (for grid pattern). Shadow masks may be used to create the pattern during coating deposition. These sizes are considered by birds of small size (such as blue tit) as an obstacle through which they cannot pass - this being even more true for birds of bigger sizes. Figures 6 and 7 show pattern examples.

Thanks to the present method, the coating 14 is deposited on a bare substrate 12. Due to the optimisation of the coating, there is no need for any antireflection layer. In other words, the glazing 10 is free of antireflection layer. This makes it possible to manufacture the glazing at lower cost.

The method comprises a step (i) comprising the definition of the coating 14, namely, the materials, the refractive indices and the thickness of the layers forming the coating 14.

The layer materials of the coating 14 are for example of dielectric materials chosen amongst $TiO_2$, $SiO_2$, $Al_2O_3$, ZnO, $HfO_2$, $ZrO_2$, $Cr_2O_3$ or $Y_2O_3$. These materials are chosen because easily deposited on glass substrate. The refractive indices of the layers are ranging from 1.4 to 2.8 (measured at 300 nm). The thickness of the layers is selected between 1 and 300 nm.

The method comprises a step (ii) where the reflectance spectrum of the coated substrate is determined, at fixed light incidence angle with respect to the normal of the substrate 12. The reflectance spectrum can be determined by calculation using any standard computational method for thin film optics, (such as 1) Transfer-matrix method: Yeh, P., Optical Waves in Layered Media, Hoboken, NJ: Wiley, 2005. 2) Finite-difference time-domain (FDTD) method: Taflove, A., and S. C. Hagness, Computational Electrodynamics: The Finite-Difference Time-Domain Method, Norwood, MA: Artech House, 2005. 3) Finite element method (FEM): Zienkiewicz, O. C., R. L. Taylor, J. Z. Zhu, The Finite Element Method: Its Basis and Fundamentals, Oxford: Butterworth-Heinemann, 2013. 4) Rigorous coupled-wave analysis (RCWA) method: Moharam, M. G., and T. K. Gaylord, "Rigorous Coupled-Wave Analysis of Planar-Grating Diffraction," Journal of the Optical Society of America, Vol. 71, No. 7, 1981, pp. 811-818).

The reflectance spectrum of the coated substrate is determined with a light incidence angle from 0 to 90° with respect to the substrate. An angle of 0° corresponds to a bird-glazing collision for which the bird trajectory is perpendicular to the glazing, in first approximation. Due to the momentum and kinetic energy associated with such a collision, such collisions are the most detrimental for both birds and glazings. The larger the angle, the less impactful the collision (at same speed and for the same mass).

In a preferred embodiment, the coating 14 is a periodic stack of different layer, preferably two layers. The stratified medium is a periodic multilayer system, the so-called Bragg stack, which is obtained by stacking two distinct layers (thicknesses: $d_1$; $d_2$, refractive indices: $n_1$; $n_2$) according to a repeated sequence of N bilayers. The bilayer thickness, $a = d_1 + d_2$, defines the spatial period of the Bragg stack, and the ratio $c = n_2 / n_1$ denotes the refractive index contrast. The advantage of a periodic stack of layers is to have a balance between the computational load (less possible combination of layers) and the properties of the glazing for reducing bird collisions. The method finds particular interest in a periodic stack of bilayers, i.e., two different layers (even less possible combination of layers for the computational load). This makes it possible to obtain a glazing that reduces bird collisions with a coating that remains invisible to human beings while at the same time being simpler to manufacture at reasonable costs.

The method comprises a step (iii) where a colour perceived according to a human vision model and a colour perceived according to an avian vision model are associated to the reflectance spectrum, i.e., calculated from the reflectance spectrum according to standard colorimetry procedures.

In general, a colour cannot be scientifically described only in terms of reflectance spectrum. In order to quantify colour, several quantification systems, known as colours spaces, have been developed. For the human vision, the human colour vision may be expressed through models in different colour spaces, such as the CIE 1931 RGB colour spaces, CIE 1931 XYZ colour space or the CIE 1976 L*a*b* colour space.

In the method according to the invention, the human vision model is preferably expressed in the CIE 1976 L*a*b* colour space, where a* and b* coordinates correspond to the chromaticity or colour parameter. In an embodiment, L* coordinate corresponding to the lightness, ranging from 0 (black) to 100 (white), is also considered as a parameter to optimise the coating. In this colour space, the distance between the coordinates of two different colours represents the degree of difference between the two colours. Using the reflectance spectrum to determine a* and b* coordinates, makes it possible to associate to the reflectance spectrum a colour perceived according to a human vision model. In an embodiment of the method, using the reflectance spectrum to determine L* coordinate, makes it possible to associate to the reflectance spectrum the lightness perceived according to a human vision model.

However, the aforementioned colour spaces are only valid for human vision. Other species have photoreceptors that often exhibit different spectral sensitivities in terms of intensity distribution as well as in terms of spectral range. For many animals such as birds, their visible spectral range extends to the violet and to the ultraviolet. Cones with a peak sensitivity located below 400 nm are called ultraviolet-sensitive (UVS) and the ones with a maximum above 400 nm are termed violet-sensitive (VS). Furthermore, the number of photoreceptor types depends upon the species. Human vision is trichromatic, namely involving three types of photoreceptors that are involved in colour vision. However, birds have tetrachromatic vision, i.e., four different types of photoreceptors or cones.

In order to quantify colour in the avian vision, and to associate the reflectance spectrum determined at step (ii) thereto, several approaches exist. The colour perceived according to the avian vision model is preferably expressed through the relative amount of photons absorbed by each type of photoreceptor related to the studied species. This parameter is termed quantum catches $Q_i$ and is calculated from

$$Q_i = k_i \int L(\lambda)S(\lambda)R_i(\lambda)d\lambda$$

where:

-    $i$ is the photoreceptor type
-    $R_i(\lambda)$ represents the photoreceptor $i$ spectral sensitivity
-    $k_i = 1 / \int L(\lambda)R_i(\lambda)d\lambda$ is a normalization constant
-    $S(\lambda)$: the reflectance spectrum determined at step (ii)
-    $L(\lambda)$: the light source spectrum. The light source is for example the $D_{65}$ illuminant corresponding to the average daylight shed on Northern Europe by a 6503.6-K black body approximating the sun at midday.

Integrating the product including reflectance spectrum $S(\lambda)$ to determine quantum catches $Q_i$ makes it possible to associate to the reflectance spectrum a colour perceived according to the avian vision model.

The method further comprises a step (iv) where steps (i) to (iii) are repeated for different layer materials, layer refractive indices and layer thicknesses of the coating. At each step repetition, one or several criteria among layer materials, layer refractive indices and layer thicknesses are different. This makes it possible to optimise the optical response of the coating on the basis of a number of trials. Step (iv) may be done numerically, in order to obtain a large number of coating parameters. Also, this makes it possible to scan systematically parameters within predefined range.

The method further comprises a step (v) where a coating is selected such that the colour perceived according to the human vision model is the closest to the colour perceived according to the human vision model of the substrate without coating and for which the colour perceived according to the avian vision model is the furthest to the colour perceived according to the avian vision model of the substrate without coating. Step (v) makes it possible to select the optimal coating, in a balance between two objectives, i.e., (1) to be invisible to human perception and (2) to reflect strongly in the violet- and ultraviolet- range, where birds are able to see. Objective (1) can be translated in terms of a* and b* coordinates by calculating and minimising the Euclidean distance

$$\Delta \mathrm{E}_{a*b*} = \sqrt{\left(a^*_{coated} - a^*_{non-coated}\right)^2 + \left(b^*_{coated} - b^*_{non-coated}\right)^2}$$

in the a*, b*-space (CIE 1976 L*a*b* colour space) between the coated substrate and non-coated substrate.

In an embodiment, lightness L* (CIE 1976 L*a*b* colour space) is also associated to the reflectance spectrum perceived according to the human vision model. Lightness L* serves to enhance the optical response of the coating. L* parameter should remain as close as possible to the value of non-coated substrate. This corresponds to minimising

$$\Delta \mathrm{E}_{L*} = \sqrt{\left(L^*_{coated} - L^*_{non-coated}\right)^2} \ .$$

For objective (2), colour discrimination is the most relevant aspect of animal vision, since it underpins an animal's ability to recognise objects. For birds, the colour discrimination between two reflectance spectra (i.e., between two stimuli) is expressed by using the chromatic distance $\Delta S$, as defined in the Receptor Noise Limited (RNL) model, introduced by Vorobyev and Osorio in 1998. The chromatic distance $\Delta S$ is equal to:

$$\sqrt{\frac{(e_V e_S)^2 (\Delta f_L - \Delta f_M)^2 + (e_V e_M)^2 (\Delta f_L - \Delta f_S)^2 + (e_V e_L)^2 (\Delta f_M - \Delta f_S)^2 + (e_S e_M)^2 (\Delta f_L - \Delta f_V)^2 + (e_S e_L)^2 (\Delta f_M - \Delta f_V)^2 + (e_M e_L)^2 (\Delta f_S - \Delta f_V)^2}{(e_V e_S e_M)^2 + (e_V e_S e_L)^2 + (e_S e_M e_L)^2}}$$

where:

- Subscripts V, S, M and L stand for either ultraviolet- or violet-sensitive cone (UVS or VS), short-, medium-, and long-wavelength-sensitive cones (SWS, MWS and LWS), respectively,

- $\Delta f_{i=V,S,M,L} = \Delta(\ln Q_i) = \ln Q_{i,A} - \ln Q_{i,B} = \ln(\frac{Q_{i,A}}{Q_{i,B}})$ : the contrast in receptor signals between two stimuli (i.e., between two reflectance spectra) A and B for the photoreceptor type i,

- $Q_i$: the quantum catches

- $e_{i=V,S,M,L} = \delta f_i = \delta \ln Q_i \simeq \frac{\delta Q_i}{Q_i} = \omega_i$ : the standard deviation of the noise in the photoreceptor $i$

  with :

  - $\delta Q_i$: the standard deviation of $Q_i$
  - $\omega_i$: the Weber fraction.

Thus, objective (2) requires to maximise the chromatic distance $\Delta S$ between the reflectance spectra from coated substrate and non-coated substrate, for a given bird species. This makes it possible to reflect strongly UV for bird species, in order to reduce bird collision with the glazing.

The discrimination threshold for $\Delta S$ may be fixed at 1. Under this value, birds might not discriminate colour between two stimuli (i.e., between two reflectance spectra, with and without coating).

The method of the invention makes it possible to limit the number of trials to get an optimised coating - thus reducing the overall manufacturing cost of the glazing.

**Example**

The avian vision model is chosen to have a violet cone exhibiting a sensitivity peak at the lower boundary of the range visible to human being, preferably, the avian vision model is chosen to have a VS cone exhibiting a sensitivity peak between 415 and 426 nm. This is hence the most challenging case, since the coating developed by the method is colourful for one species (bird species) and transparent for another one (human), whereas both have all their spectral sensitivity peaks located in the range visible to the human being, or more precisely, at the lower boundary of the range visible to the human being. To this end, the chosen avian vision model among the anseriform (e.g., ducks and geese) and galliform (e.g., turkeys, pheasants and grouses) species is the one of the chicken, that is the best known and the most accurate, despite the fact that this species is probably not well known for colliding with glass glazings. This visual model is however representative of other anseriform and galliform species that are reported to collide with glass glazings. Of course, and this will be further explained below, the performances of the optimised multilayer coating are also assessed with respect to the vision of birds from the other categories. The two vision models that were selected for these categories were the pigeon and the blue tit. Note that for specific cases, the coating could be optimised for only one category or even one bird species, provided a vision model is available or can be developed for this category or species.

Step (iv) is for example performed by brute-force search, i.e., scanning systematically parameters within predefined range. The search was carried out for various dielectric materials and number N of bilayers. The results corresponding to a multilayer made of 9 bilayers are presented hereafter (cf. Table 1). The top (#1) and bottom (#2) layers were chosen to be made of $SiO_2$ and $TiO_2$, respectively (easy synthesis and deposition), with refractive indices (at 300 nm) equal to 1.4925 and 2.8100, respectively. The incidence medium was assumed to be air (with a refractive index of 1) and the substrate was defined as soda lime glass (with a refractive index of 1.5570 at 300 nm). Using a standard electromagnetic computational code, reflectance spectra of such multilayers were determined with layer thicknesses ranging from 1 to 300 nm in step of 1 nm. This makes it possible to calculate $\Delta E_{a*b*}$ and $\Delta S$ values for each combination of thicknesses. The parameter $\Delta E_{a*b*}$ relates to human perception and the optimal layer thicknesses are selected in such a way that the coating is not detected by human eye. The ideal target value of $\Delta E_{a*b*}$ is therefore zero. The parameter $\Delta S$ needs to be maximised, as it determines the ability of glazing detection by birds. Its maximal value is limited by the boundaries of the bird colour space. These two parameters were calculated for perception of the coating by chickens. One of the best candidates is denoted candidate #I (Table 1). The discrimination threshold for $\Delta S$ is considered to be 1.

Plotting $\Delta E_{a*b*}$ as a function of $\Delta S$ makes it possible to identify the best trade-off between a coating invisible to human and visible to birds. Figure 2 depicts $\Delta E_{a*b*}$ as a function of $\Delta S$. The solutions, for which $\Delta S$ cannot be increased without increasing $\Delta E_{a*b*}$ or $\Delta E_{a*b*}$ cannot be decreased without decreasing $\Delta S$ are the optimal solutions. They form the so-called Pareto front 36. This front could be divided into two sections. The first one runs approximately parallel to the $\Delta E_{a*b*} = 0$ axis from $\Delta S = 0$ to ca. 3. The second one forms an arc from $\Delta S \approx 3$ to ca. 6. Solutions that show the best trade-off for the coating are located at the junction of these two sections: from a chromatic point of view, the related coatings are very close to bare substrate but, at the same time, correspond to a visual stimulus that is substantially different for chickens.

Based on this multi-objective optimisation, 13 candidates (namely, $d_1$, $d_2$ couples) were selected. Ten of them were in the thickness ranges 100 nm $\leq d_1 \leq$ 130 nm and 5 nm $\leq d_2 \leq$ 10 nm. Four candidates #I, #II, #III, #IV are listed in Table 1 and correspond to marks 38, 40, 42, 44 respectively in figure 2. Among the candidates, candidates #I and #II exhibit the two best trade-offs. Such best trade-offs are not determined via an algorithm but on the basis of Table 1. Best candidates are chosen so as to keep a balance between computed quantities $\Delta E_{a*b*}$, $\Delta S$ and possibly $\Delta E_{L*}$. Candidates #III and #IV are presented here as outliers for the sake of clarity in the selection process of step (v) of the method.

Table 1

| Candidate number | $d_1$ (nm) | $d_2$ (nm) | $\Delta E_{a*b*}$ | $\Delta S$ | $\Delta E_{L*}$ |
|---|---|---|---|---|---|
| I | 118 | 7 | 0.1961 | 2.3428 | 2.7988 |
| II | 114 | 8 | 0,1158 | 2.2489 | 2.2616 |
| III | 113 | 8 | 0.3082 | 2.1143 | 2.1773 |
| IV | 224 | 232 | 0.4299 | 2.5668 | 39.7777 |

Table 1 shows the best candidates selected after multi-objective optimisation.

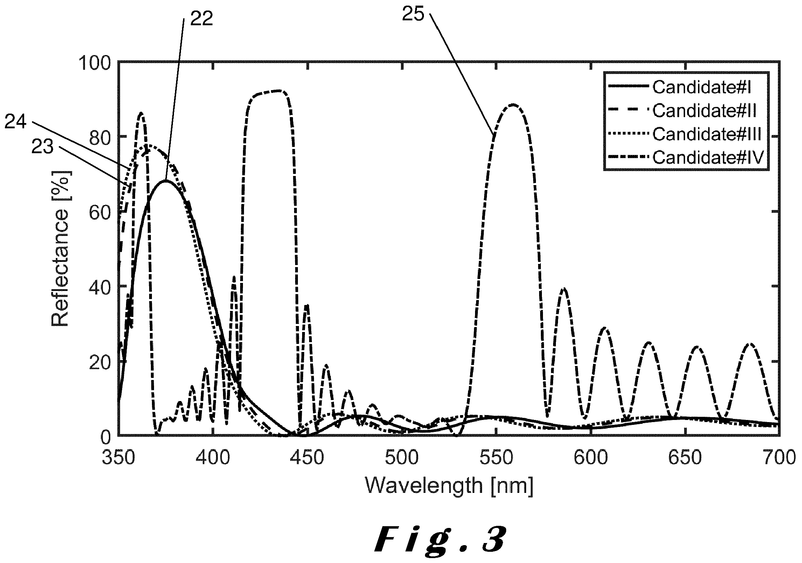

Figure 3 shows the reflectance spectra of the four candidates selected after optimisation for $\Delta E_{a*b*}$ and $\Delta S$ (four candidates #I, #II, #III and #IV corresponding to curves 22, 23, 24, 25 respectively). Preferably, optimisation was performed at normal incidence to the layers ($\theta = 0°$). This configuration corresponds to a bird-glazing collision for which the bird trajectory is perpendicular to the glazing, in first approximation. Due to the momentum and kinetic energy associated with such a collision, such collisions are the most detrimental for both birds and glazings. The larger the angle, the less impactful the collision (at same speed and for the same mass).

Looking at the reflectance spectra of the four optimal candidates (figure 3) makes it possible to reject candidate #IV (and other similar candidates): both peaks in the human visible range excite the human photoreceptors in just proportion so that coordinates a* and b* are very close to the ones of light reflection on bare substrate.

So far, one optimisation aspect is neglected, i.e., minimising the difference in lightness $\Delta E_{L*}$. Thus, in an embodiment of the method, candidate #IV can also be excluded solely based on the $\Delta E_{L*}$ values. For instance, candidate #IV exhibits a difference in lightness $\Delta E_{L*}$ values significantly higher than the other candidates (see Table 1).

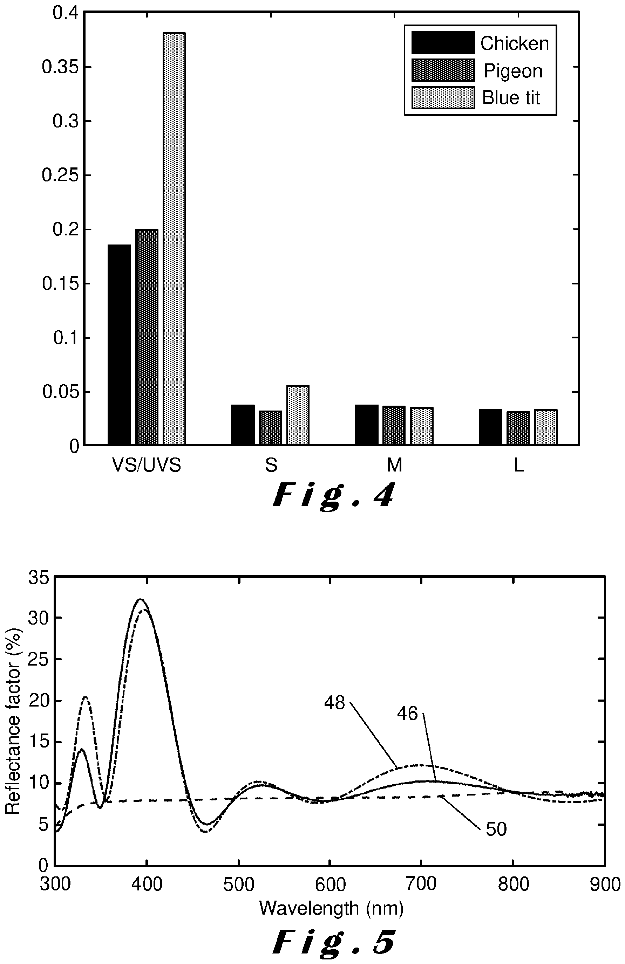

Figure 4 shows quantum catches calculated from the reflectance spectra of candidate #I (Table 1) for the photoreceptors of the chicken, the pigeon and the blue tit. Candidates #I, #II, #III and alike display quantum catch values for their VS/UVS cone photoreceptors that are much higher than for the three other cones, which exhibit low values. Based on the computation of quantum catches (figure 4), it appears that species with VS/UVS photoreceptors whose sensitivity peak is located at shorter wavelength than the chicken would also be more sensitive to the optimised coatings. This is confirmed by $\Delta S$ values calculated for these three species. For candidates #I, #II, #III and alike, $\Delta S_{chicken} \leq \Delta S_{pigeon} \leq \Delta S_{blue\ tit}$ (Table 2) where the pigeon and blue tit have VS/UVS photoreceptor whose sensitivity peak is located at shorter wavelength than the chicken Thus, the chicken is the most challenging case and was hence chosen for the optimisation.

Table 2

| Candidate number | $d_1$ (nm) | $d_2$ (nm) | $\Delta S_{chicken}$ | $\Delta S_{pigeon}$ | $\Delta S_{blue\ tit}$ |
|---|---|---|---|---|---|
| I | 118 | 7 | 2.3428 | 3.5829 | 3.7922 |
| II | 114 | 8 | 2.2489 | 3.4650 | 3.8899 |
| III | 113 | 8 | 2.1143 | 3.2861 | 3.8461 |
| IV | 224 | 232 | 2.5668 | 2.0687 | 0.5290 |

Table 2 corresponds to the best candidates selected after multi-objective optimisation.

The reflectance spectrum of the coated substrate corresponding to candidates #I and #II was also determined with a light incidence at 45° to the substrate. The pigeon and the blue tit still detect the coatings, with values of $\Delta S$ higher than 1 for both species. For the chicken, the value is just under 1 for candidate #I and much lower for candidate #II (Table 3). On the basis of Table 3, candidate #I hence appears to be the best one. $\Delta E_{a*b*}$ values stay very low (< 3.8), though are a bit higher than at 0°-incidence. $\Delta E_{L*}$ is even lower at 45°-incidence than at normal incidence, corresponding to a better match between the coated substrate and bare substrate.

Table 3

| Candidate number | I | II |
|---|---|---|
| $d_1$ (nm) | 118 | 114 |
| $d_2$ (nm) | 7 | 8 |
| $\Delta S_{chicken}$ 45° | 0.8194 | 0.5722 |
| $\Delta S_{pigeon}$ 45° | 1.2748 | 1.3027 |
| $\Delta S_{blue\ tit}$ 45° | 2.7783 | 2.7573 |
| $\Delta E_{a*b*}$ 45° | 3.6656 | 3.7901 |
| $\Delta E_{L*}$ 45° | 1.8972 | 1.4197 |

Table 3 shows the performance of the two best candidates selected after multi-objective optimisation with a 45°-incidence.

In addition to the performance of candidate #I ($d_1$ = 118 nm and $d_2$ = 7 nm), the fact that most candidates had thicknesses in the ranges 100 nm $\leq d_1 \leq$ 130 nm and 5 nm $\leq d_2 \leq$ 10 nm (with N = 9) implies some tolerance to defects in terms of thickness during the fabrication process - what eases the fabrication process.

After synthesis and deposition of the coating 14, the optical performance of the coating 14 are measured by spectrophotometry. The a* and b* coordinates, $Q_i$ and $\Delta S$ (as well as L* coordinate according to an embodiment) are calculated from these measurements. Thus, before the deposition of the coating 14 on the substrate 12, the optical response of the multilayer coating 14 is optimised in terms of structure - including material, refractive indices and thickness of the layers of the coating 14. This is performed by considering the aforementioned constraints, i.e., colour perceived according to human and avian vision models; in an embodiment, lightness according to human vision model is also taken into consideration.

The glazing 10 obtained by the method makes it possible to reduce the bird collision. The coating 14 is invisible to human eyes while its ultraviolet response is optimised to avoid bird-glazing collisions. The coating 14 is a multilayer structure. Preferably, the multilayer structure is a periodic stack of layers what eases the optimisation of the optical response and manufacture thereof. The periodic stack may be of two different layers what eases even more the optimisation of the optical response and manufacture thereof - and reduce the cost. In addition, a periodic stack of two layers offers reflectance spectrum with sharp edges and high reflectance in the V and UV range - thus visible for birds while in a wavelengths range that is invisible to human eye. The coating is a nanostructured coating.

Figure 5 illustrates the reflectance spectra corresponding to a glazing with a different coating obtained according to the present method. At step (v), the selected coating is a 4-bilayer coating with layers selected to be made of an $Al_2O_3$ layer (117 nm) and a $TiO_2$ layer (8 nm).

Curve 46 illustrates a substrate made of a microscope slide (of 1 mm) coated with the $Al_2O_3$ layer (117 nm) and the $TiO_2$ layer (8 nm). Curve 48 illustrates a simulation of the same glazing and curve 50 is the result for an uncoated microscope slide (bare substrate). Looking at the reflectance spectra of figure 5: in the human visible range, the human photoreceptors are excited in just proportion so that chromatically the stimulus is very close to light reflection on bare substrate, in terms of a*, b* and L*. In avian visible range (short UV wavelengths around 400 nm), as in figure 3, the coated substrate is visible. Simulation corresponding to curve 48 is very close to curve 46.

Tables 4 and 5 show how the candidate of figure 5 exhibits a good trade-off. This candidate is chosen so as to keep a balance between computed quantities $\Delta E_{a*b*}$, $\Delta S$ and possibly $\Delta E_{L*}$.

Table 5

| Candidate | $d_1$ (nm) | $d_2$ (nm) | $\Delta E_{a*b*}$ | $\Delta S$ | $\Delta E_{L*}$ |
|---|---|---|---|---|---|
| $Al_2O_3$ / $TiO_2$ | 117 | 8 | 0.5142 | 1.4147 | 1.5018 |

Table 4

| Candidate | $d_1$ (nm) | $d_2$ (nm) | $\Delta S_{chicken}$ | $\Delta S_{pigeon}$ | $\Delta S_{blue\ tit}$ |
|---|---|---|---|---|---|
| $Al_2O_3$ / $TiO_2$ | 117 | 8 | 1.4147 | 1.6108 | 1.2814 |

Figures 6 and 7 are pictures of a glazing with the coating structure of figure 5, under visible light and UV light. Figure 6 shows pictures of microscope slides coated with 4 bilayers of $Al_2O_3$ (117 nm thickness) and $TiO_2$ (8 nm) by physical vapour deposition (PVD), in the visible range (a) with a white (top) and a black (bottom) background; and in the near UV (315-410 nm) range (b). The deposited coating with a random pattern (Mikado pattern) is only visible under UV light (b) - thus, visible to birds and not to humans. Figure 7 shows pictures of microscope slides coated with 4 bilayers of $Al_2O_3$ (117 nm) and $TiO_2$ (8 nm) by physical vapour deposition (PVD), in the visible range (a) with a white (top) and a black (bottom) background; and in the near UV (315-410 nm) range (b). The deposited coating with a grid pattern is only visible under UV light (b) - thus, visible to birds and not to humans.

**Claims**

1. A method for determining a glazing (10) for reducing bird collisions, the glazing (10) comprising at least one substrate (12) and over at least a part of the substrate surface, a multilayer UV reflectance coating (14), the method comprising the steps of

   (i) Defining layer materials, layer refractive indices and layer thicknesses forming the coating (14),
   (ii) Determining the reflectance spectrum of the coated substrate, at a fixed light incidence angle with respect to the normal to the substrate (12),
   (iii) Associating to the reflectance spectrum a colour perceived according to a human vision model and a colour perceived according to an avian vision model,
   (iv) Repeating the steps (i) to (iii) for different layer materials, layer refractive indices and layer thicknesses of the coating,
   (v) Selecting the coating such that

      • the colour of the reflectance spectrum perceived according to the human vision model is the closest to the colour of the reflectance spectrum perceived according to the human vision model of the substrate without coating and for which

• the colour of the reflectance spectrum perceived according to the avian vision model is the furthest to the colour of the reflectance spectrum perceived according to the avian vision model of the substrate without coating.

2. The method of claim 1, wherein the coating is a periodic stack of different layers with their respective material, refractive index and thickness, the number of periods of different layers being equal to or greater than two.

3. The method of claim 2, wherein the coating is a periodic stack of two different layers, with their respective material, refractive index and thickness.

4. The method of claim 3, wherein the thickness of the two layers of the periodic stack are in the ranges of $100\,nm \leq d_1 \leq 130\,nm$ and $5\,nm \leq d_2 \leq 10\,nm$ and with a reflective index in the range of $2 < n_1 < 2.8$ and $1.4 < n_2 < 1.5$ respectively.

5. The method of any one of the preceding claims, wherein

- At step (ii), reflectance spectrum of the coated substrate is also determined with a light incidence angle from 0 to 90° with respect to the substrate, and/or
- at step (iii), a lightness is also associated to the reflectance spectrum perceived according to the human vision model.

6. The method of any one of the preceding claims, wherein the human vision model is expressed in the CIE 1976 L*a*b* colour space.

7. The method of the preceding claim, wherein at step (v), the Euclidean distance between L*a*b* coordinates of the coated substrate and L*a*b* coordinates of the uncoated substrate is calculated and selection of the coating is performed by minimising said Euclidean distance.

8. The method of one of the preceding claims, wherein at step (iv) the repetition of steps (i), (ii) and (iii) is performed with layer thicknesses selected between 1 and 300 nm with a step of 1 nm.

9. The method of preceding claim, wherein the avian vision model is chosen to have a violet cone exhibiting a sensitivity peak at the lower boundary of the range visible to human being, preferably, the avian vision model is chosen to have a violet cone exhibiting a sensitivity peak between 415 and 426 nm.

10. The method of any one of the preceding claims, wherein the layers of the multilayer UV reflectance coating are dielectric materials chosen amongst $TiO_2$, $SiO_2$, $Al_2O_3$, ZnO, $HfO_2$, $ZrO_2$, $Cr_2O_3$ or $Y_2O_3$.

11. A glazing (10) for reducing bird collisions obtained with the method according to claims 1 to 10, the glazing comprising

- at least one substrate (12) and
- over at least a part of the substrate surface, a multilayer UV reflectance coating (14) with a periodic stack of two different layers with their respective thickness and refractive indices, the number of periods of two different layers being equal to or greater than two.

12. The glazing of claim 11, wherein the UV reflectance coating (14) reflects daylight in the wavelength range of approximately 320 nm to 420 nm.

13. The glazing of claim 11 or 12, wherein the UV reflectance coating (14) covers at least parts of the substrate (12), with stripes forming a random or a grid pattern.

14. The glazing of claim 13, wherein the width of these stripes are between 0.3 cm and 2 cm and the stripes are spaced by a space between 1 cm to 10 cm.

15. The glazing of claim 11 to 14, wherein the coating is deposited on a bare substrate.

*Fig.1*

*Fig.2*

*Fig. 3*

*F i g . 4*

*F i g . 5*

Fig.6

Fig.7

Europäisches
Patentamt

European
Patent Office

Office européen
des brevets

# EUROPEAN SEARCH REPORT

Application Number

EP 21 21 4460

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 11 092 726 B1 (WUILLAUME FRANCIS [US] ET AL) 17 August 2021 (2021-08-17) | 1-5,8-15 | INV. G01N21/25 |
| Y | * column 4, line 32 - column 11, line 30; figures 3-6 * | 6,7 | C03C17/00 A01M29/08 G01J3/50 |
| X | US 2020/174333 A1 (MATHEW JOHN GORDON HALBERT [US] ET AL) 4 June 2020 (2020-06-04) * paragraphs [0036], [0044] - [0048], [0052], [0053], [0070]; figures 1-2B * * paragraph [0138] - paragraph [0140]; table 2 * * figures 7A,7B * | 10-15 | G01N21/84 G02B5/26 G01N21/55 |
| Y | US 2016/137850 A1 (RIDEALGH JOHN ANDREW [GB] ET AL) 19 May 2016 (2016-05-19) * paragraphs [0001], [0005], [0027], [0047] * * paragraphs [0091] - [0107], [0116] - [0117] * * figures 1,7 * | 6,7 | |

TECHNICAL FIELDS
SEARCHED       (IPC)

G01N
G01J
A01M
G02B

The present search report has been drawn up for all claims

| Place of search | Date of completion of the search | Examiner |
|---|---|---|
| Munich | 31 May 2022 | Consalvo, Daniela |

## ANNEX TO THE EUROPEAN SEARCH REPORT
## ON EUROPEAN PATENT APPLICATION NO.

EP 21 21 4460

This annex lists the patent family members relating to the patent documents cited in the above-mentioned European search report.
The members are as contained in the European Patent Office EDP file on
The European Patent Office is in no way liable for these particulars which are merely given for the purpose of information.

31-05-2022

| Patent document cited in search report | | Publication date | Patent family member(s) | | Publication date |
|---|---|---|---|---|---|
| US 11092726 | B1 | 17-08-2021 | US 11092726 B1 | | 17-08-2021 |
| | | | US 2022026611 A1 | | 27-01-2022 |
| | | | WO 2021258082 A1 | | 23-12-2021 |
| US 2020174333 | A1 | 04-06-2020 | CA 2991892 A1 | | 19-01-2017 |
| | | | CN 107850816 A | | 27-03-2018 |
| | | | EP 3320393 A1 | | 16-05-2018 |
| | | | US 2018173071 A1 | | 21-06-2018 |
| | | | US 2020174333 A1 | | 04-06-2020 |
| | | | WO 2017011268 A1 | | 19-01-2017 |
| US 2016137850 | A1 | 19-05-2016 | CN 105339320 A | | 17-02-2016 |
| | | | EP 3004010 A1 | | 13-04-2016 |
| | | | JP 6450747 B2 | | 09-01-2019 |
| | | | JP 2016520033 A | | 11-07-2016 |
| | | | US 2016137850 A1 | | 19-05-2016 |
| | | | WO 2014188196 A1 | | 27-11-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 20161989011 A

- WO 2015183681 A

### Non-patent literature cited in the description

- **YEH, P.** Optical Waves in Layered Media. Wiley, 2005
- **TAFLOVE, A. ; S. C. HAGNESS.** Computational Electrodynamics: The Finite-Difference Time-Domain Method. Artech House, 2005

- **ZIENKIEWICZ, O. C. ; R. L. TAYLOR ; J. Z. ZHU.** The Finite Element Method: Its Basis and Fundamentals. Butterworth-Heinemann, 2013
- **MOHARAM, M. G. ; T. K. GAYLORD.** Rigorous Coupled-Wave Analysis of Planar-Grating Diffraction. *Journal of the Optical Society of America,* 1981, vol. 71 (7), 811-818